# DEMANDE DE BREVET EUROPEEN

(11) **EP 0 847 686 A1**
(43) Date de publication de la demande: **17.06.1998**
(21) Numéro de dépôt: 97402969.6
(22) Date de dépôt: 09.12.1997
(51) Int. Cl.: A01G 9/02

(54) **Poterie d'horticulture à moyens de suspension**

(30) Priorité: 10.12.1996 FR 9615150
(71) Demandeur: Grigi, Bernard, 39570 Geruge (FR)
(72) Inventeur: Grigi, Bernard, 39570 Geruge (FR)
(74) Mandataire: Casalonga, Axel

(57) **Abrégé**

Poterie d'horticulture, en particulier jardinière ou balconière, comprenant un pot (2) muni de moyens de suspension. Lesdits moyens de suspension (3) comprennent une plaque (4) qui prolonge une paroi latérale (5) dudit pot et dans l'épaisseur de laquelle est formé au moins un crochet (11) susceptible d'être déployé pour constituer un moyen d'accrochage à un support et/ou au moins un bras (26) susceptible d'être déployé, l'extrémité dudit bras présentant un moyen d'accouplement (28) à un moyen d'accouplement complémentaire (37) du bord dudit pot.

## Description

La présente invention concerne une poterie d'horticulture, en particulier constituant une jardinière ou une balconière.

Actuellement, les jardinières ou balconières comprennent trois parties, à savoir un support à structure filaire, en L, dont la branche verticale présente des crochets, une soucoupe posée sur la branche horizontale du support et un pot disposé sur la soucoupe.

Le but de la présente invention est de proposer une poterie d'horticulture nettement plus simple et polyvalente quant à son utilisation.

Selon un objet de l'invention, lesdits moyens de suspension comprennent une plaque qui prolonge la paroi latérale dudit pot et dans l'épaisseur de laquelle est formé au moins un crochet susceptible d'être déployé pour constituer un moyen d'accrochage à un support.

Selon un autre objet de l'invention, lesdits moyens de suspension comprennent une plaque prolongeant la paroi latérale dudit pot et dans l'épaisseur de laquelle est formé au moins un bras susceptible d'être déployé et dont l'extrémité présente un moyen d'accouplement à un moyen d'accouplement complémentaire du bord dudit pot.

Selon un autre objet de l'invention, lesdits moyens de suspension comprennent au moins deux crochets espacés dans le sens de la périphérie dudit pot.

Selon un autre objet de l'invention, lesdits moyens de suspension comprennent deux bras formés latéralement à ladite plaque et espacés dans le sens périphérique dudit pot.

Selon l'invention, une zone linéaire d'affaiblissement constituant une articulation est de préférence formée entre ladite plaque et ledit pot.

Selon l'invention, une zone linéaire d'affaiblissement constituant une articulation est de préférence formée entre ledit crochet et ladite plaque.

Selon l'invention, une zone linéaire d'affaiblissement constituant une articulation est de préférence formée entre ledit bras et ladite plaque.

Selon l'invention, ledit crochet est de préférence formé dans une ouverture de ladite plaque.

Selon l'invention, ledit moyen d'accouplement dudit bras comprend de préférence un organe d'accrochage.

Selon un autre objet de l'invention, lesdits moyens de suspension comprennent en outre des orifices traversant ladite plaque, au travers desquels peuvent passer des éléments de fixation.

La présente invention sera mieux comprise à l'étude d'une poterie d'horticulture, en particulier destinée à constituer une jardinière ou une balconière, décrite à titre d'exemple non limitatif et illustré par le dessin sur lequel :
- la figure 1 représente une vue de dessus d'une poterie d'horticulture selon la présente invention, dans la position qu'elle occupe en sortie de moulage ;
- la figure 2 représente une vue latérale de la poterie d'horticulture de la figure 1
- la figure 3 représente une vue de face de la poterie d'horticulture de la figure 1, dans une position accrochée à un support ;
- la figure 4 représente une vue latérale de la poterie d'horticulture telle que représentée sur la figure 3.

La poterie d'horticulture représentée sur les dessins, repérée d'une manière générale par la référence 1, comprend un pot 2 de forme parallélipipédique, auquel sont attachés des moyens de suspension 3.

Ces moyens de suspension 3 comprennent une plaque 4, sensiblement de forme rectangulaire qui prolonge une paroi latérale 5 du pot 2, cette plaque 4 et cette paroi latérale 5 présentant entre elles une zone linéaire 6 d'affaiblissement d'épaisseur réduite, constituant une articulation par déformation de la matière, permettant de faire varier l'orientation de la plaque 4 par rapport au pot 2.

La plaque 4 comprend deux passages traversants 7 et 8 qui délimitent par leurs formes deux petits crochets 9 et 10 situés du côté de la ligne 6 et deux grands crochets 11 et 12 plus éloignés.

Entre les pieds de ces crochets et deux branches latérales 13 et 14 de la plaque 4 qui s'étendent perpendiculairement à la ligne 6, sont prévues respectivement des zones linéaires d'affaiblissement 15 et 16 d'épaisseur réduite, qui constituent des articulations permettant de déployer ces crochets à l'extérieur des ouvertures 7 et 8.

Les crochets 9, 10, 11 et 12 présentent respectivement des bras principaux 17, 18, 19 et 20 qui s'étendent parallèlement à la ligne 6 et, à leur extrémité située du côté d'une branche centrale 21 de la plaque 4, des bras secondaires 22, 23, 24 et 25 qui s'étendent perpendiculairement et en direction de la ligne 6.

A partir de ses branches latérales 13 et 14, la plaque 4 porte deux bras ou tirants latéraux 26 et 27 dont les extrémités sont en forme de crochets 28 et 29. Entre les pieds des bras 26 et 27 et les branches 13 et 14 de la plaque 4 sont prévues des zones linéaires d'affaiblissement 30 et 31 d'épaisseur réduite, qui constituent des articulations permettant d'orienter les bras 26 et 27 par rapport à la plaque 4.

Dans la branche centrale 21 et dans ses parties 32 et 33 situées de l'autre côté des ouvertures 7 et 8 par rapport à la ligne 6, la plaque 4 présente des orifices traversants 34, 35 et 36.

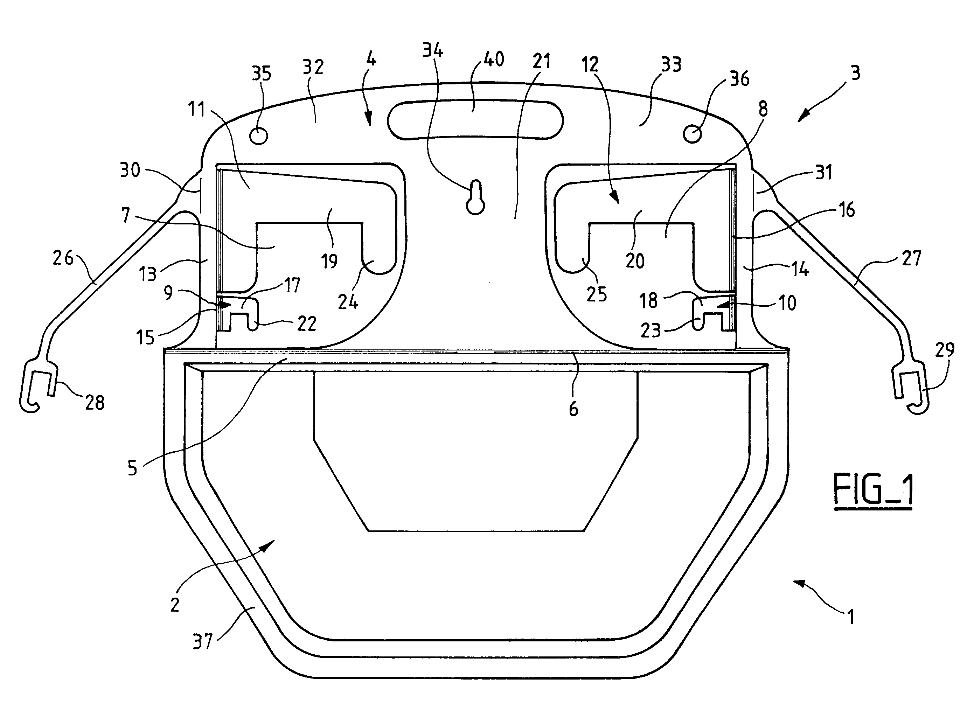

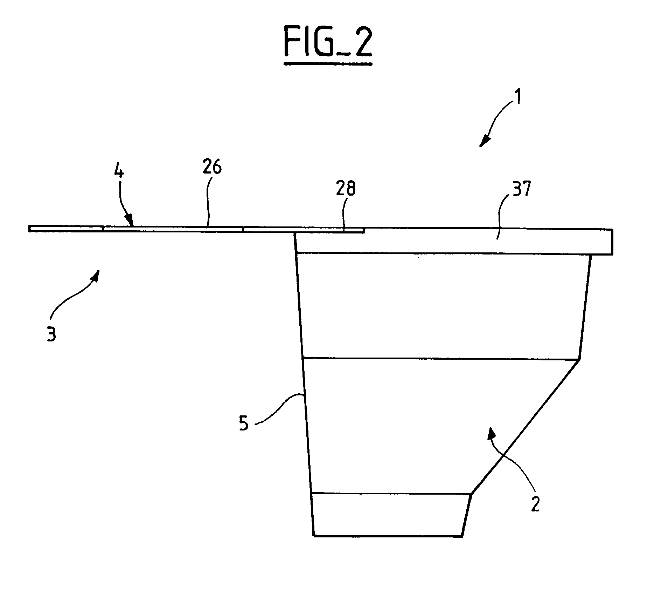

Dans la position représentée sur les figures 1 et 2, obtenues directement par moulage par exemple par injection, la plaque 4 munie de ses crochets 9, 10, 11 et 12 et de ses bras latéraux 26 et 27 s'étendent dans un même plan et sont sensiblement de même épaisseur, ce plan s'étendant dans le prolongement du plan couvrant l'ouverture supérieure du pot 2. Ainsi, la poterie 1 en une seule pièce peut être obtenue dans un moule en deux parties.

La poterie d'horticulture 1 qui vient d'être décrite peut présenter plusieurs utilisations.

La plaque 2 peut être fixée à plat contre une surface plane d'un support non représenté, par l'intermédiaire d'éléments de fixation non représentés tels que des vis passant au travers des orifices 34, 35 et 36 prévus à cet effet, le pot 2 étant suspendu à la plaque 4 ainsi accrochée.

Dans une variante de l'exemple ci-dessus, la plaque 4 peut être fixée contre une paroi verticale, la paroi latérale 5 du pot 2 venant également contre cette paroi verticale en-dessous de la plaque 4. Dans ce cas, la plaque 4 s'étend sensiblement dans le prolongement de la paroi latérale 5 du pot 2.

Dans une autre variante, la plaque 4 peut être fixée contre la face supérieure d'un support tel qu'un mur, la paroi latérale 5 du pot 2 venant en appui contre une face latérale de ce mur. Dans ce cas, la plaque 4 s'étend sensiblement perpendiculairement à la paroi latérale 5 du pot 2.

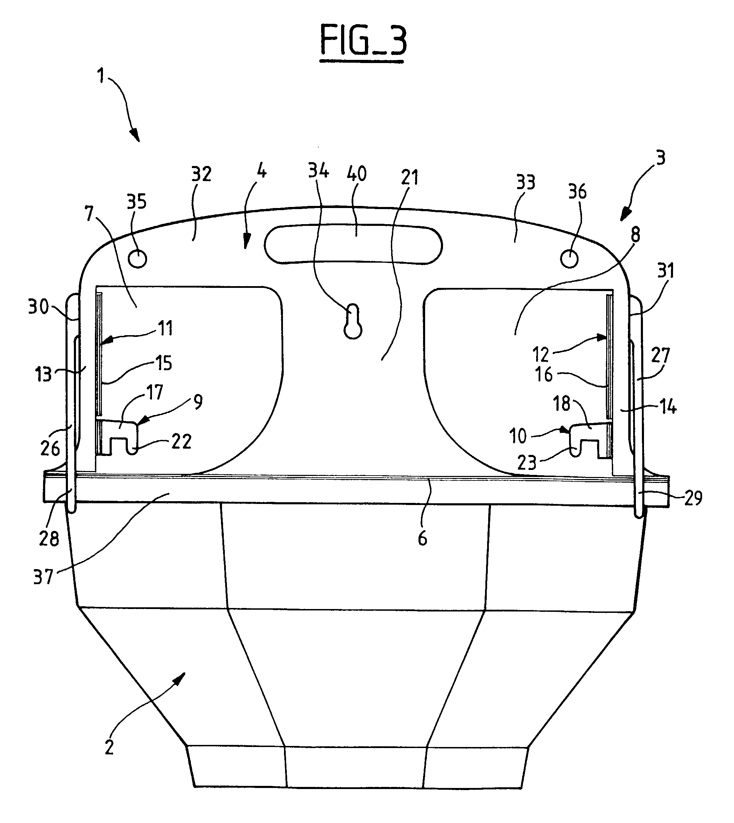

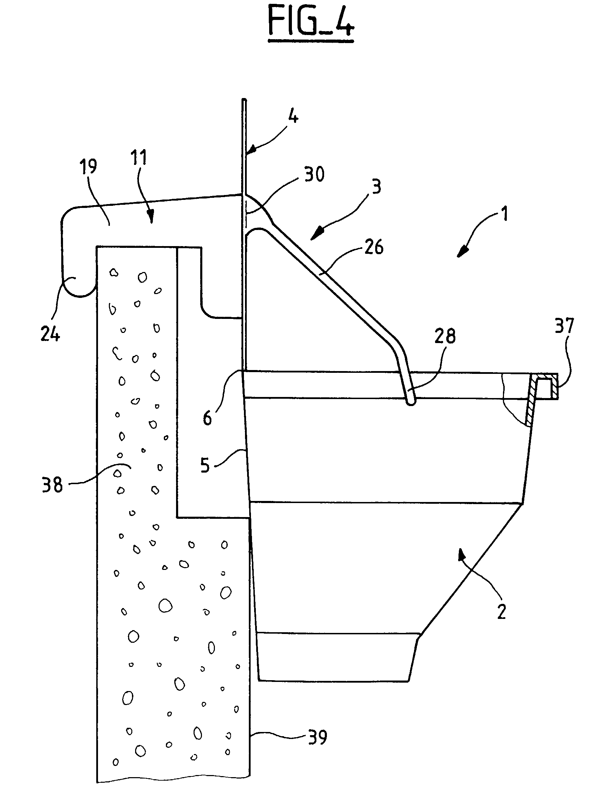

En se reportant aux figures 3 et 4, on voit qu'on peut également disposer la plaque 4 sensiblement dans le prolongement de la paroi latérale 5 du pot 2 de telle sorte qu'elle s'étende vers le haut, qu'on peut faire pivoter vers l'avant les bras 26 et 27 de telle sorte que leurs crochets 28 et 29 soient mis en prise avec le rebord périphérique 37 du pot 2. Ainsi, l'orientation de la plaque 4 est solidement maintenue par rapport au pot 2.

On peut alors déployer à l'opposé du pot 2 soit les crochets 9 et 10 soit les crochets 11 et 12, de manière à pouvoir mettre en prise ces crochets avec un support par accrochage par le dessus de ce dernier.

On voit en particulier sur la figure 4, que les grands crochets 11 et 12 sont en prise avec le bord supérieur d'un bord de balcon 38, la paroi latérale 5 du pot 2 venant en appui contre une face latérale 39 de ce balcon 36. Par ailleurs, les petits crochets 9 et 10 sont plutôt destinés à passer au travers des mailles d'un grillage vertical de manière à s'y accrocher.

Par ailleurs, la plaque 4 comprend, dans sa zone médiane située au-delà de sa branche centrale 21, une ouverture qui permet de saisir aisément la poterie 1.

## Revendications

1. Poterie d'horticulture, en particulier jardinière ou balconière, comprenant un pot (2) muni de moyens de suspension, caractérisée par le fait que lesdits moyens de suspension (3) comprennent une plaque (4) qui prolonge une paroi latérale (5) dudit pot et dans l'épaisseur de laquelle est formé au moins un crochet (11) susceptible d'être déployé pour constituer un moyen d'accrochage à un support.

2. Poterie d'horticulture selon la revendication 1, caractérisée par le fait que lesdits moyens de suspension comprennent au moins un bras (26) formé dans l'épaisseur de ladite plaque et susceptible d'être déployé, l'extrémité dudit bras présentant un moyen d'accouplement (28) à un moyen d'accouplement complémentaire (37) du bord dudit pot.

3. Poterie d'horticulture, en particulier jardinière ou balconière, comprenant un pot (2) muni de moyens de suspension, caractérisée par le fait que lesdits moyens de suspension (3) comprennent une plaque (4) prolongeant une paroi latérale (5) dudit pot et dans l'épaisseur de laquelle est formé au moins un bras (26) susceptible d'être déployé et dont l'extrémité présente un moyen d'accouplement (28) à un moyen d'accouplement complémentaire (37) du bord dudit pot.

4. Poterie d'horticulture selon la revendication 3, caractérisée par le fait que lesdits moyens de suspension comprennent au moins un crochet (11) formé dans l'épaisseur de ladite plaque (4) et susceptible d'être déployé pour constituer un moyen d'accrochage à un support.

5. Poterie d'horticulture selon l'une quelconque des revendications précédentes, caractérisée par le fait que lesdits moyens de suspension comprennent au moins deux crochets (11, 12) espacés dans le sens de la périphérie dudit pot.

6. Poterie d'horticulture selon l'une quelconque des revendications précédentes, caractérisée par le fait que lesdits moyens de suspension comprennent deux bras (26, 27) formés latéralement à ladite plaque et espacés dans le sens périphérique dudit pot.

7. Poterie d'horticulture selon l'une quelconque des revendications précédentes, caractérisée par le fait qu'une zone linéaire d'affaiblissement (6) constituant une articulation est formée entre ladite plaque et ledit pot.

8. Poterie d'horticulture selon l'une quelconque des revendications 1, 2, 4 à 7, caractérisé par le fait qu'une zone linéaire d'affaiblissement (15) constituant une articulation est formée entre ledit crochet et ladite plaque.

9. Poterie d'horticulture selon l'une quelconque des revendications 3, 4, 6 et 7, caractérisée par le fait qu'une zone linéaire d'affaiblissement (30) constituant une articulation est formée entre ledit bras et ladite plaque.

10. Poterie d'horticulture selon l'une quelconque des revendications 1, 2, 4 à 8, caractérisée par le fait que ledit crochet (11) est formé dans une ouverture (7) de ladite plaque.

11. Poterie d'horticulture selon l'une quelconque des revendications 3, 4, 6, 7 et 9, caractérisée par le fait que ledit moyen d'accouplement dudit bras comprend un organe d'accrochage (28).

12. Poterie d'horticulture selon l'une quelconque des revendications précédentes, caractérisée par le fait que lesdits moyens de suspension comprennent en outre des orifices (34) traversant ladite plaque, au travers desquels peuvent passer des éléments de fixation.
